(19) Europäisches Patentamt
European Patent Office
Office européen des brevets

(11) EP 1 491 282 A1

(12) **EUROPEAN PATENT APPLICATION**
published in accordance with Art. 158(3) EPC

(43) Date of publication:
**29.12.2004 Bulletin 2004/53**

(21) Application number: **03744020.3**

(22) Date of filing: **07.03.2003**

(51) Int Cl.[7]: **B23K 33/00**, B23K 26/20, B60R 21/26

(86) International application number:
**PCT/JP2003/002733**

(87) International publication number:
**WO 2003/076122 (18.09.2003 Gazette 2003/38)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.03.2002 JP 2002063846**

(71) Applicant: **Nippon Kayaku Kabushiki Kaisha**
**Tokyo 102-8172 (JP)**

(72) Inventors:
- **MURAI, Yasuo**
  **Fujisawa-shi, Kanagawa 251-0014 (JP)**
- **AOKI, Yasuhiro**
  **Himeji-shi, Hyogo 679-2122 (JP)**

(74) Representative: **Intès, Didier Gérard André et al**
**Cabinet Beau de Loménie,**
**158, rue de l'Université**
**75340 Paris Cedex 07 (FR)**

(54) **LASER WELDED TUBE FITTING STRUCTURE AND GAS GENERATOR WITH THE TUBE FITTING STRUCTURE**

(57) There is provided a laser welded joint structure for a flare groove joint, wherein a flat portion 4 for forming a square-like groove in the flare groove is formed at a beam-injected portion of the flare groove on at least one side of welded members 1 and 2. There is also provided a gas generator comprising the above-described laser welded joint structure.

FIG. 1 (a)

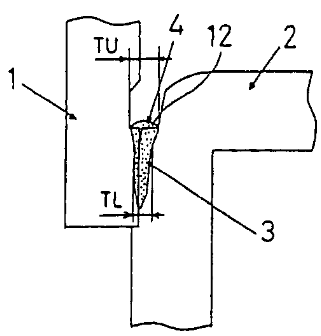


FIG. 1 (b)

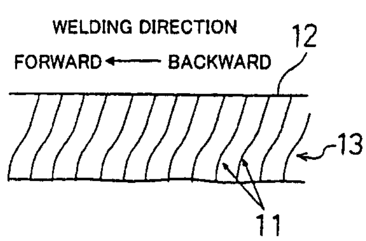


EP 1 491 282 A1

## Description

### TECHNICAL FIELD

The present invention relates to a welded joint structure in which two welded members, such as a press-molded steel member and a press-molded steel member or such as a press-molded product and a steel member, are jointed to each other by means of laser welding.

Particularly, the present invention relates to a laser welded joint structure for a flare groove joint in which a groove is, in a sectional view, made up of two arcs or made up of an arc and a straight line.

Examples of the welded members include steel materials, etc., that constitute car components such as gas generators, building components, household appliance components, and the like.

A groove that is, when seen in a section of a flare groove joint, made up of two arcs is hereinafter referred to as "flare single V groove". A groove that is, when seen in a section of a flare groove joint, made up of an arc and a straight line is hereinafter referred to as "flare single bevel groove".

### BACKGROUND ART

Differently from electron-beam welding, laser welding need not always be performed under a vacuum pressure, and can be performed in the atmosphere. In addition, the laser welding has features that an energy density of beam is high, that welding can be performed at a high speed, and that little deformation is caused by welding. Accordingly, its application field is widely spreading now.

When ordinary laser welding is applied to a joint, a groove has, in most cases, a rectangular sectional shape. A groove-shaped flat portion in a sectional view is hereinafter referred to as "square groove".

In some products having a flare groove joint, however, a groove has, in a sectional view, a shape of flare single V as shown in FIG. 10 or flare single bevel as shown in FIG. 11.

When these types of joint are subjected to laser welding, welding is conventionally performed with a welding speed and beam power being adjusted in order to obtain a weld-penetration of a desired depth.

However, an attempt to obtain a weld-penetration of a certain depth, e.g., 1.5 mm or more, at a welding speed of 0.5 m/min or higher has resulted in a problem that a surface of a weld metal suffers from a crack.

Such a crack occurs at a very high possibility in case of, not to mention a case of linear weld lines, a flare groove joint of a fitting-type joint that demonstrates high binding force.

Thus, as an approach for prevention of this crack, there has been used highly pure steel materials having less phosphorus (hereinafter referred to as "P") and less sulfur (hereinafter referred to as "S"), each of which constitutes one factor in crack.

However, this approach involves a problem that kinds of steel used are limited.

A first object of the present invention is to provide a laser welded joint structure in which, when laser-welding a flare groove joint, no crack is caused in a surface of a weld metal even if an ordinary general-purpose steel member is adopted.

In particular, the first object of the present invention is to provide a laser welded joint structure that allows a weld-penetration of 1.5 mm depth or more at a welding speed of 0.5 m/min or higher without causing any crack in a surface of a weld.

A second object of the present invention is to provide a gas generator having the above-mentioned laser welded joint structure, with no crack, etc., caused on a weld surface and with its joint portion improved in reliability.

### DISCLOSURE OF THE INVENTION

In order to find out what causes a crack in case of using laser welding for welding a flare groove joint, the present inventors have examined in detail a cross-sectional structure and a longitudinal-sectional structure of a weld metal at a welded portion.

For an explanation of examination results, joint for a flare single V groove is taken as an example with reference to FIG. 12. In FIG. 12, reference numerals 1 and 2 denote welded steel members, and a reference numeral 3 denotes a weld metal. FIG. 12 shows a cross-sectional structural model of the weld metal 3 at a welded portion, where a crack 5 is caused. A width TU [mm] of a surface of the weld metal 3 was found smaller than a width TL [mm] of a portion of the weld metal 3 just under the surface. Also found was that, in most flare groove joints, a weld metal takes such a shape as illustrated in FIG. 12.

FIG. 13 shows a model of a longitudinal-sectional microstructure of the weld metal 3 at the welded portion. It was confirmed that a solidification line 11 in an underlayer portion 13 located under the surface lagged, in a direction of welding, behind a solidification of a surface 12.

That is, presence or absence of generation of the crack 5 is related to whether or not there is a time lag in solidification of the underlayer portion 13 located under the surface. Thus, a main point is to find out a welding operation condition under which the solidification exhibits no time lag.

The present inventors have conducted an intensive study in order to find out a welding operation condition under which exhibited is no time lag in solidification of a portion just under a surface of a weld metal at a welded portion.

As a result, it has been revealed that an improvement in welding condition only is insufficient as a solution and an improvement in structure of a groove works effectively.

Thus, a laser welded joint structure of the present invention is a laser welded joint structure for a flare groove joint and characterized in that a flat portion for forming a square-like groove in the flare groove is formed at a beam-injected portion of the flare groove on at least one side of welded members.

This can provide such a weld-penetration that, in a cross-sectional microstructure of a weld metal at a laser-welded portion of the flare groove joint, a width of a surface is equal to or larger than widths of the other portions of the weld metal, particularly than a width of a portion of the weld metal located just under the surface.

In addition, in a longitudinal-sectional solidification microstructure of a center of the weld metal at the laser-welded portion of the flare groove joint, a solidifying point of the surface comes in a position equal to solidifying points of the other portion, particularly to a solidifying point of an underlayer portion located under the surface, or the solidifying point of the surface comes most behind in a processing direction of welding.

Therefore, no crack is caused in a surface of a laser-welded portion, even when a flare groove joint comprises an ordinary general-purpose steel member.

A width T of the flat portion for forming a square-like groove is preferably 0.5 mm or more to 2.0 mm or less. When the width T of the flat portion for forming a square-like groove is less than 0.5 mm, that width T is too small for a practically applicable laser-welding condition and therefore provides little effect.

In addition, it is preferable that the width T [mm] of the flat portion for forming a square-like groove satisfies the following expression:

$$T \geqq Q/1500$$

where Q represents "laser output [W] / welding speed [m/min]". Hereinafter, Q is referred to as "weld-heat input" or simply as "heat input".

A gas generator of the present invention is characterized by comprising the above-described laser welded joint structure.

## BRIEF DESCRIPTION OF THE DRAWINGS

FIGS. 1(a) and 1(b) show an example of a state where a flat portion for forming a square-like groove is formed on both welded members that constitute a flare groove joint having a flare single bevel groove. FIG. 1 (a) shows a state of weld-penetration of a weld metal in a cross-sectional view. FIG. 1(b) is a model view showing a form of solidification lines of the weld metal in a longitudinal-sectional view, where no crack is caused.

FIGS. 2(a) and 2(b) show an example of laser-welded portions in which a flat portion for forming a square-like groove is formed on one of welded members that constitute a flare groove joint having a flare single bevel groove. FIG. 2(a) shows a state of weld-penetration of a weld metal in a cross-sectional view. FIG. 2(b) is a model view showing a form of solidification lines of the weld metal in a longitudinal-sectional view, where no crack is caused.

FIG. 3 is a sectional view of an exemplified gas generator comprising the laser-welded joint structure of the present invention.

FIG. 4 shows a configuration of members used in weld tests in Example 1.

FIG. 5(a) shows a conventional flare single bevel groove of a flare groove joint. FIG. 5(b) shows a shape of a groove of the members used in the weld tests in Example 1, which is a flare single bevel groove having a flat portion for forming a square-like groove formed on one of the members. FIG. 5(c) shows a shape of a groove of the members used in the weld tests in Example 1, which is a flare single bevel groove having a flat portion for forming a square-like groove formed on both of the members.

FIG. 6 shows a relationship among presence or absence of a crack in a welded portion, a weld-heat input Q, and a width T [mm] of a flat portion formed on a surface of a groove, which was obtained from test results of Example 1.

FIG. 7 shows a configuration of members used in weld tests in Example 2.

FIG. 8(a) shows a conventional flare single V groove of a flare groove joint. FIG. 8(b) shows a flare single V groove having a flat portion for forming a square-like groove formed on one of the members. FIG. 8(c) shows a shape of a groove of the members used in the weld tests in Example 2, which is a flare single V groove having a flat portion for forming a square-like groove formed on both of the members.

FIG. 9 shows a relationship among presence or absence of a crack in a welded portion, a weld-heat input Q, and a width T [mm] of a flat portion formed on a surface of a groove, which was obtained from test results of Example 2.

FIG. 10 shows an example of conventional single V grooves of flare groove joints.

FIG. 11 shows an example of conventional single bevel grooves of flare groove joints.

FIG. 12 is a sectional view of a laser-welded single V groove of a flare groove joint according to the prior art, for explaining generation of a crack.

FIG. 13 is a model view showing, in a longitudinal-sectional view, a form of solidification lines of a weld metal at a laser-welded portion according to the prior art, where a crack is caused.

FIG. 14 shows TABLE 1 indicating a limit of welding conditions in the tests.

FIG. 15 shows TABLE 2 indicating welding conditions in the tests of Example 1 and examination results for a crack.

FIG. 16 shows TABLE 3 indicating welding conditions in the tests of Example 2 and examination results for a crack.

BEST MODE FOR CARRYING OUT THE INVENTION

An exemplary embodiment of a laser-welded joint structure of the present invention will be described below with reference to the accompanying drawings.

FIGS. 1(a) and 1(b) show sections of a laser-welded portion of a flare groove joint having a flare single bevel groove. A flat portion 4 for forming a square-like groove is formed on both welded members 1 and 2.

FIG. 1(a) is a cross-sectional microstructure of a weld metal in a direction of welding, and shows a state of weld-penetration of the weld metal in a cross-sectional view. FIG. 1(b) is a model view showing a form of solidification lines of the weld metal in a longitudinal-sectional view, where no crack is caused.

In FIG. 1(a), reference numerals 1 and 2 denote steel members that serve as the welded members, a reference numeral 3 denotes a weld metal portion, and a reference numeral 4 denotes a flat portion formed into a square-groove shape. In FIG. 1(b), a reference numeral 11 denotes solidification lines of the weld metal, a reference numeral 12 denotes a surface of the weld metal, and a reference numeral 13 denotes an underlayer portion under the surface of the weld metal.

It was found that, by forming the flat portion 4 for forming a square-like groove at a beam-injected portion of a groove, a width TU [mm] of the surface 12 of the weld metal became larger than a width TL [mm] of a portion located just under the surface, as shown in FIG. 1(a). Also found was that, as shown in FIG. 1(b), a solidification line 11 in a longitudinal-sectional microstructure came most behind in the direction of welding when it was in the surface 12. This demonstrates that a final point of solidification in the weld metal had shifted to the surface of the weld metal, to thereby prevent a solidification crack.

FIGS. 2(a) and 2(b) show sections of a laser-welded portion of a flare groove joint having a flare single bevel groove. A flat portion 4 for forming a square-like groove is formed on one of welded members. FIG. 2(a) is a cross-sectional microstructure of a weld metal 3 in a direction of welding, and shows a state of weld-penetration of the weld metal 3 in a cross-sectional view. FIG. 2(b) is a longitudinal-sectional solidification microstructure of the weld metal in the direction of welding, and is a model view showing a form of solidification lines of the weld metal in a longitudinal-sectional view.

It was found that, as shown in FIG. 2(b), a solidification line 11 in a longitudinal-sectional microstructure came, as compared with conventional ones, more behind in the direction of welding when it was in a surface 12. A solidification crack can thereby be prevented.

Like this, the flat portion 4 for forming a square-like groove is formed at the groove of the flare single bevel groove joint on one or both of the welded members, so that a generation of a crack in the surface of the welded portion can effectively be prevented.

A larger width of the flat portion 4 for forming a square-like groove results in larger effects, because such a configuration becomes similar to a butt joint of flat plates. However, in terms of intensity required for flare groove joints, the width of the flat portion 4 is preferably set at a minimum required value.

Herein, the width TU [mm] of the surface 12 of the weld metal is, in general, almost uniquely determined in accordance with a ratio between a laser output in welding and a welding speed. As the laser output becomes larger or the welding speed becomes lower, the width TU [mm] becomes larger. When a width T [mm] of the flat portion 4 is smaller than the width TU [mm], it becomes difficult to completely avoid a time lag in solidification of a portion of the weld metal located just under the surface.

Accordingly, a larger weld-heat input Q leads to necessity of a larger width T [mm] of the flat portion. The weld-heat input Q represents "laser output [W] /welding speed [m/min]".

When, moreover, the width of the flat portion is less than 0.5 mm, that width is too small for a practically applicable laser-welding condition and therefore provides little effect. Under such a welding condition that the weld-heat input Q is less than 500, a sectional area of a weld metal portion becomes small. Therefore, it can be considered that such a welding condition is rarely applied to metal goods in which generation of a crack is of great matter. The weld-heat input Q is preferably 500 or more to 2250 or less.

FIGS. 8(b) and 8(c) show a case where a flare groove joint 7 has a V-shaped groove. Referring to FIG. 8(b), a flat portion 4 for forming a square-like groove is formed on one of welded members. A width of the flat portion 4 is TS [mm]. Referring to FIG. 8(c), a flat portion 4 for forming a square-like groove is formed on both of welded members. A width of the flat portion 4 is TD [mm]. A case of the V-shaped groove is similar to the case where a flare groove joint has a flare single bevel groove, and therefore a description thereof will be omitted.

The laser welded joint structure as described above can provide advantageous effects that generation of a crack having bad influence on performance of the welded portion is completely prevented, that the welded portion is improved in quality, that the number of welding steps and inspection and repair steps is largely reduced, and that manufacture costs are largely reduced.

Next, the laser welded joint structure of the above-described embodiment will be described by means of specific Examples.

[Example 1]

Referring to FIG. 4, a steel material of SPG according to Japanese Industrial Standard G3452 having a phi, ø, of 60.5 mm and a plate thickness of 3.5 mm was machined into a cylindrical shape to thereby form a first steel member 1. Further, a steel material of SPCD according to Japanese Industrial Standard G3141 having a plate thickness of 3 mm was press-molded and then machined, to thereby form a cylindrical second steel member 2 provided with a flange portion.

The first steel member 1 was fitted into the second steel member 2, and thus formed was a flare groove joint 7 having a flare single bevel groove.

Then, as shown in FIG. 5(b), a flat portion 4 for forming a square-like groove was formed on the second steel member. A width of the flat portion 4 was set at TS [mm].

Alternatively, as shown in FIG. 5(c), a flat portion 4 for forming a square-like groove was formed on both the first and second steel members. A width of the flat portion 4 was set at TD [mm].

A $CO_2$ laser welding was then performed thereon under welding conditions within a limit specified in TABLE 1 of FIG. 14. Then, examined was whether or not a crack arose in a surface and a section of a welded portion.

[Comparative Example 1]

In Comparative Example 1, a $CO_2$ laser welding was performed under the same conditions as in Example 1 on a conventional flare single bevel groove illustrated in FIG. 5(a). Then, a surface and a section of a welded portion were examined for presence or absence of generation of a crack.

In both of Example 1 and Comparative Example 1, a laser-welding device of 5 kW was adopted, and a test member was chucked on a rotary jig and then welded during its rotation. TABLE 1 of FIG. 14 indicates the limit of welding conditions in the tests. TABLE 2 of FIG. 15 indicates welding conditions in the tests and examination results for a crack.

[Study 1]

As seen from TABLE 2, the groove of Comparative Example 1 having no flat portion formed on its surface failed to avoid generation of a crack even though welding conditions were changed. The groove of Example 1 having the flat portion formed on its surface could avoid generation of a crack under many different welding conditions.

It was found from test results that a proper width T [mm] of the flat portion is preferably so determined as to satisfy the following expression:

$$T \geqq Q/1500$$

where Q represents "laser output [W] / welding speed [m/min]".

FIG. 6 shows the test results. FIG. 6 is a graph showing a relationship among presence or absence of a crack in the welded portion, the weld-heat input Q, and the width T [mm] of the flat portion formed on a surface of the groove.

The welded portions in Example 1 were examined for weld-penetration, and, as a result, they were all found with weld-penetrations of 1.5 mm depth or more. Also, in a cross-sectional microstructure, the width of the surface of the weld metal was larger than the width of the portion located just under the surface. Further, in a longitudinal-sectional solidification microstructure of a center of the weld metal, a solidifying point of the surface of the weld metal came most behind in a processing direction of welding, in comparison with other solidifying points of underlayer portions located under the surface including a portion located just under the surface.

[Example 2]

Referring to FIG. 7, a steel material of SPCD according to Japanese Industrial Standard G3141 having a plate thickness of 3 mm was press-molded and then machined, to thereby form a disc-shaped first steel member 1. The first steel member 1 was assembled to and fitted into a second steel member 2 having a flange portion, and thus formed was a flare groove joint 7 having a flare single V groove.

Then, as shown in FIG. 8(c), a flat portion 4 for forming a square-like groove was formed on both the first and second steel members. A width of the flat portion 4 was set at TD [mm].

A YAG laser-welding was performed thereon, and then a surface and a section of a welded portion were examined for presence or absence of generation of a crack.

[Comparative Example 2]

In Comparative Example 2, a YAG laser-welding was performed, under the same conditions as in Example 2, on a conventional flare single V groove illustrated in FIG. 8(a). Then, a surface and a section of a welded portion were examined for presence or absence of generation of a crack.

In both of Example 2 and Comparative Example 2, a laser-welding device of 5 kW was adopted, and a test member was chucked on a rotary jig and then welded during its rotation. TABLE 1 of FIG. 14 indicates a limit of welding conditions in the tests. TABLE 3 of FIG. 16 indicates welding conditions in the tests and examination results for a crack.

[Study 2]

As seen from TABLE 3, in case of a flare single V groove joint as well, the groove of Comparative Example 2 having no flat portion formed on its surface failed to avoid generation of a crack even though welding conditions were changed.

It was confirmed that the groove of Example 2 having the flat portion formed on its surface could avoid generation of a crack under many different welding conditions.

It was found from test results that a proper width T [mm] of the flat portion is preferably so determined as to satisfy the following expression:

$$T \geqq Q/1500$$

where Q represents "laser output [W] / welding speed [m/min]".

FIG. 9 shows the test results. FIG. 9 is a graph showing a relationship among presence or absence of a crack in the welded portion, the weld-heat input Q, and the width T [mm] of the flat portion formed on a surface of the groove.

As described above, when laser-welding a flare single V groove joint or a flare single bevel groove joint, no crack is caused in the surface of the weld metal even if an ordinary general-purpose steel material is adopted.

[Gas Generator]

As a consequence, the aforementioned structure can be applied to every joint portion of a gas generator 20 for inflating an automobile airbag, etc, as shown in FIG. 3.

The gas generator described herein is just an exemplified embodiment of a gas generator, and a gas generator that comprises the laser welded joint structure of the present invention is not limited thereto.

The gas generator 20 shown in FIG. 3 is one for inflating and expanding a driver-seat airbag. The gas generator 20 comprises a housing 23, a cylindrical first partition member 6, a second partition member 27, a filter material 28, gas generants 29, and ignition means 31, 30.

The housing 23 is a short cylinder made up of an initiator shell 21 and a closure shell 22. The cylindrical first partition member 6 divides an inside of the housing 23 into combustion chambers 24a, 24b and a filter chamber 25 in a circumferential direction. The second partition member 27 divides the combustion chambers 24a, 24b into two of upper and lower combustion chambers 24a and 24b. The filter material 28 is mounted in the filter chamber 25. Each of the combustion chambers 24a and 24b is loaded with the gas generants 29. The ignition means 31, 30 burn the gas generants 29 independently of each other.

The initiator shell 21 and the closure shell 22 abut with each other to form a flare groove joint to be laser-welded. This welded portion 50 has a flare single bevel groove. A flat portion for forming a square-like groove is formed at a beam-injected portion of the flare single bevel groove on at least one of the initiator shell 21 and the closure shell 22, and then a welding is performed.

In addition, the initiator shell 21 and a bottom base 32 that supports the ignition means 31, 30 constitute a flare groove joint to be laser-welded. This welded portion 51 has a flare single V groove. A flat portion for forming a square-like groove is formed at a beam-injected portion of the flare single V groove on at least one of the bottom base 32 and the initiator shell 21, and then a welding is performed.

Such a joint structure causes no crack, etc., in welding surfaces of the welded portions 50 and 51, and surely seals up the housing 23. Like this, a joint structure of the present invention is applicable to a joint portion of a gas generator made of a general-purpose material. As a result, a laser-welded joint portion obtains increased reliability.

While the present invention has been described in conjunction with the preferred embodiments outlined above, the present invention is not limited thereto. It would be appreciated that other various embodiments may be practiced without departing from the spirit and scope of the present invention.

INDUSTRIAL APPLICABILITY

The present invention as described above is best suited for a laser welded joint structure in which, when laser-welding a flare groove joint, no crack is caused in a surface of a weld metal even if an ordinary general-purpose steel member is adopted.

Particularly, the present invention as described above is best suited for a laser welded joint structure that allows a weld-penetration of 1.5 mm depth or more at a welding speed of 0.5 m/min or higher without causing any crack in a surface of a weld.

The present invention is also best suited for a gas generator having the laser welded joint structure of the present invention, with no crack, etc., caused on a weld surface and with its joint portion improved in reliability.

**Claims**

**1.** A laser welded joint structure for a flare groove joint, wherein
a flat portion for forming a square-like groove in the flare groove is formed at a beam-injected portion of the flare groove on at least one side of welded members.

**2.** The laser welded joint structure according to Claim 1, wherein
a width of the flat portion for forming a square-like groove is 0.5 mm or more to 2.0 mm or less.

**3.** The laser welded joint structure according to Claim 1, wherein

a width T [mm] of the flat portion for forming a square-like groove satisfies the following expression:

$$T \geqq Q/1500$$

where Q represents "laser output [W] / welding speed [m/min]", and is referred to as a weld-heat input or a heat input.

**4.** The laser welded joint structure according to Claim 1, wherein

in respect of a cross-sectional microstructure of a weld metal at a laser-welded portion of the flare groove joint, a width of a surface of the weld metal is equal to or larger than a width of a portion of the weld metal just under the surface of the weld metal.

**5.** The laser welded joint structure according to Claim 1, wherein,

in respect of a longitudinal-sectional solidification microstructure of a center of a weld metal at a laser-welded portion of the flare groove joint, a solidifying point of a surface comes in a position equal to a solidifying point of an underlayer portion located under the surface, or the solidifying point of the surface comes most behind in a processing direction of welding.

**6.** A gas generator comprising the laser welded joint structure according to Claim 1.

**7.** A gas generator comprising the laser welded joint structure according to Claim 2.

**8.** A gas generator comprising the laser welded joint structure according to Claim 3.

**9.** A gas generator comprising the laser welded joint structure according to Claim 4.

**10.** A gas generator comprising the laser welded joint structure according to Claim 5.

FIG. 1 (a)

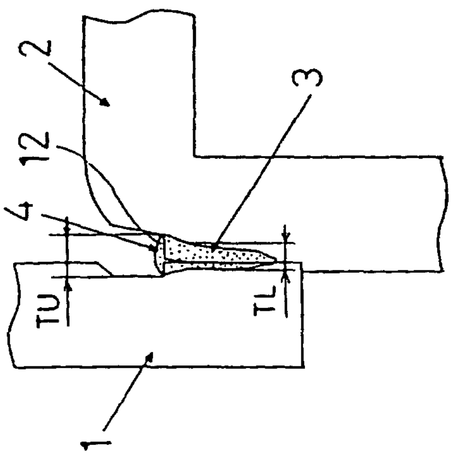


FIG. 1 (b)

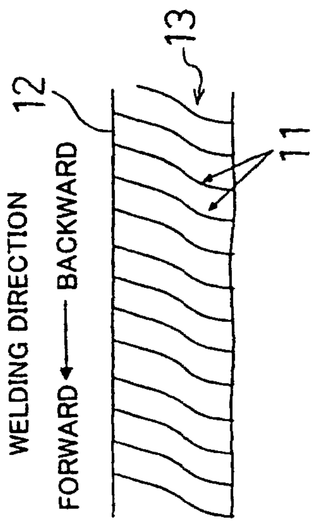

FIG. 2 (a)

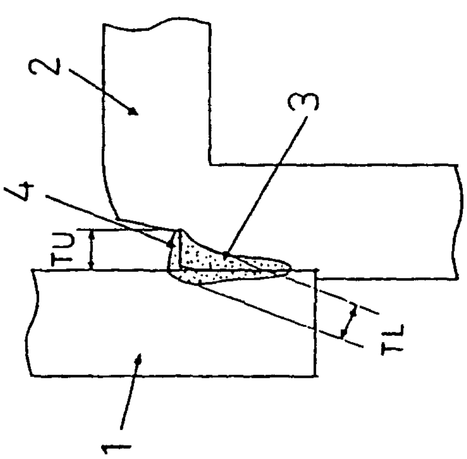


FIG. 2 (b)

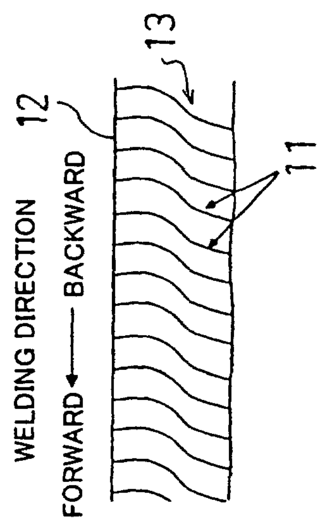

FIG. 3

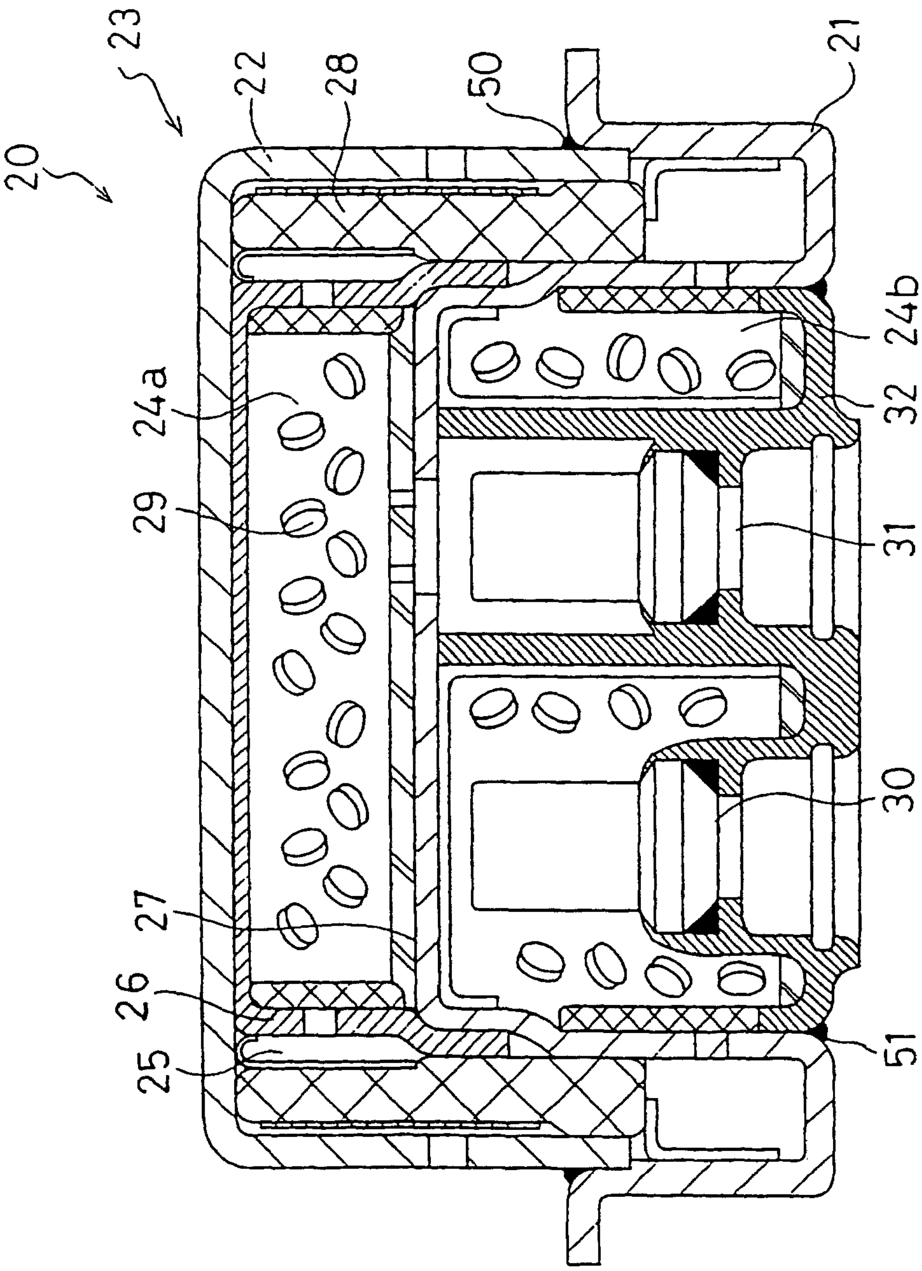

FIG. 4

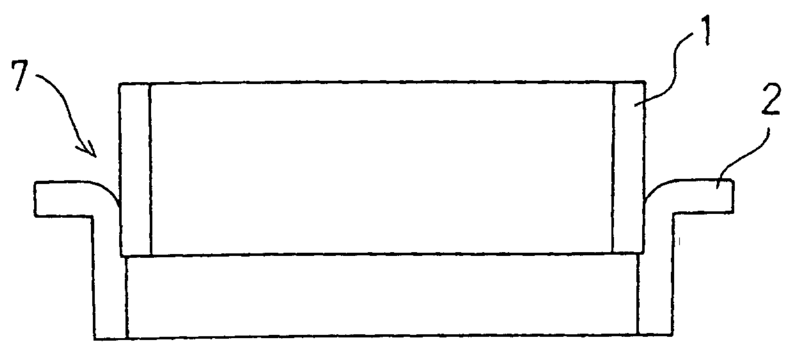

FIG. 5 (a)

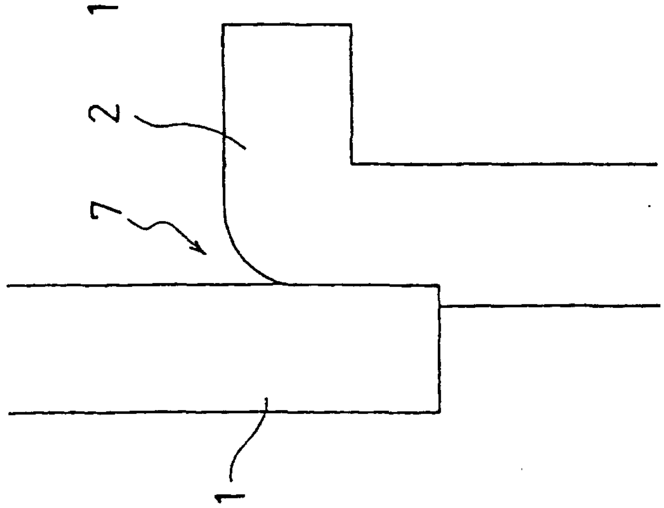


FIG. 5 (b)

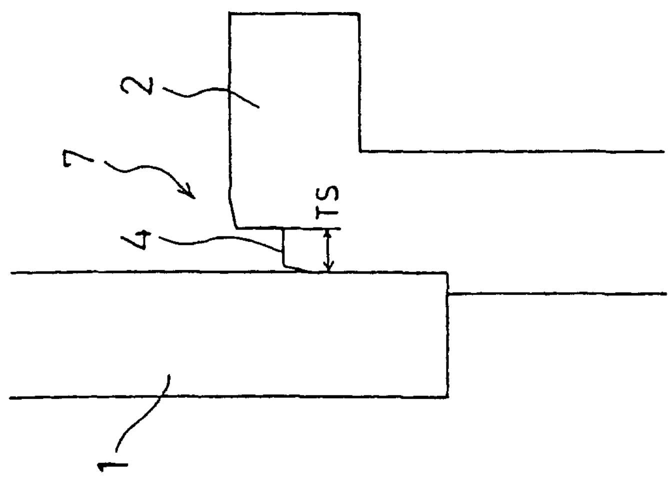


FIG. 5 (c)

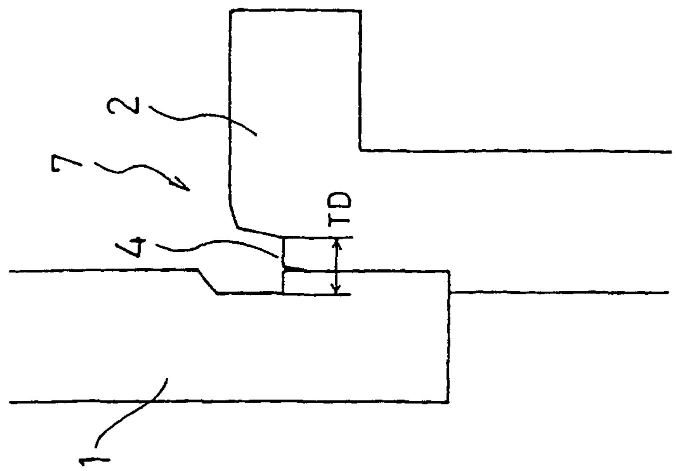

FIG. 6

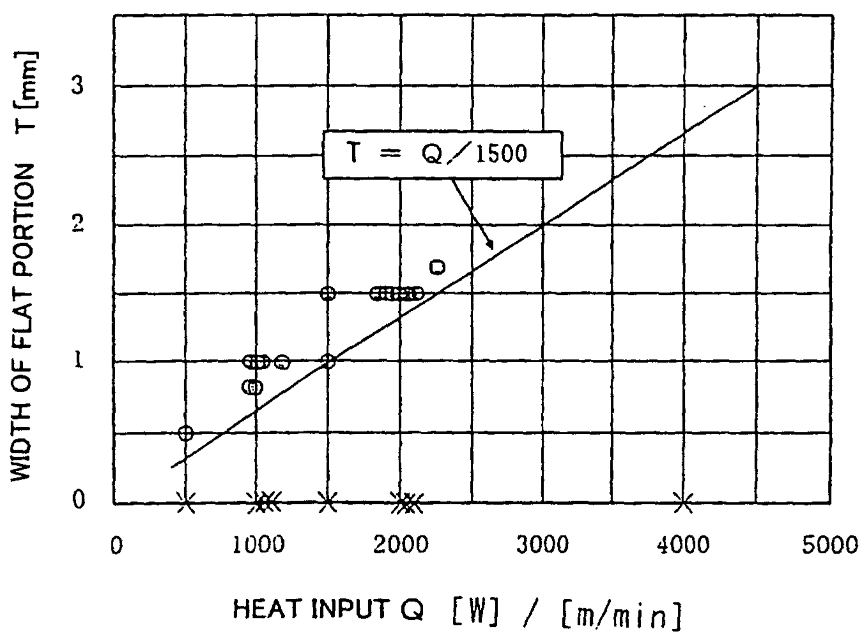
T = Q／1500
WIDTH OF FLAT PORTION T [mm]
0
1
2
3
0
1000
2000
3000
4000
5000
HEAT INPUT Q [W] / [m/min]

FIG. 7

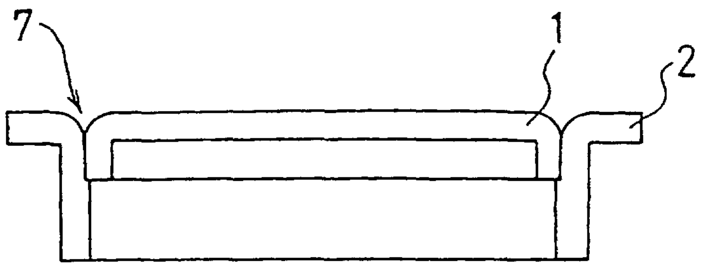

FIG. 8 (a)

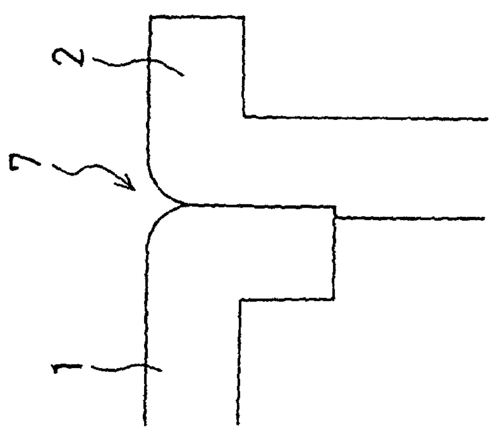


FIG. 8 (b)

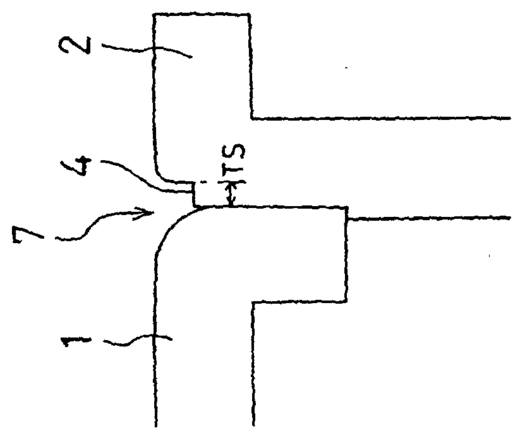


FIG. 8 (c)

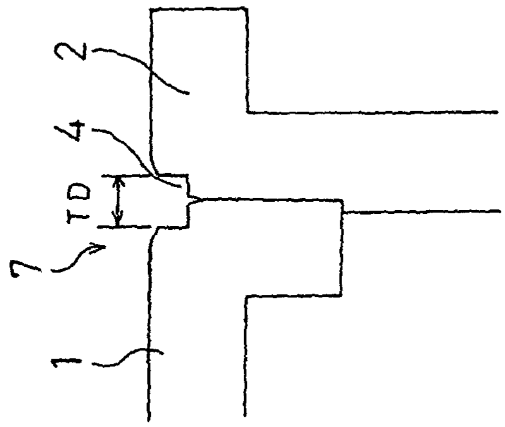

FIG. 9

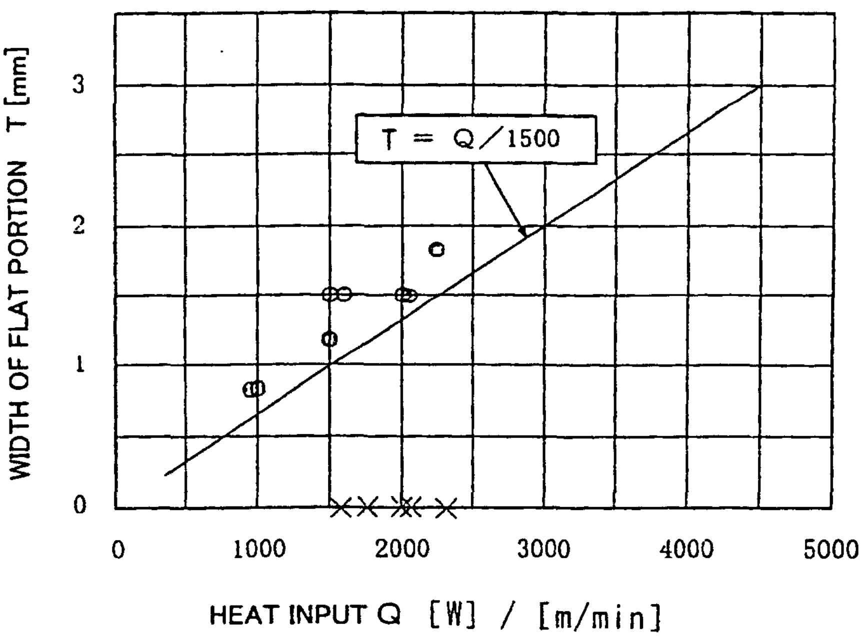
WIDTH OF FLAT PORTION T [mm]
3
2
1
0
T = Q／1500
0
1000
2000
3000
4000
5000
HEAT INPUT Q [W] / [m/min]

FIG. 10

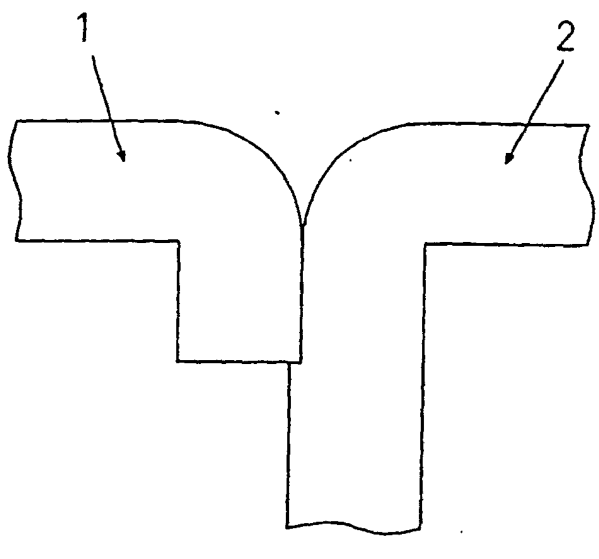

FIG. 11

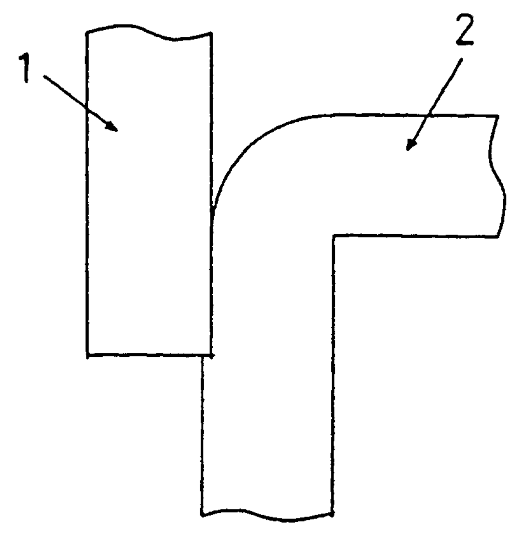

FIG. 12

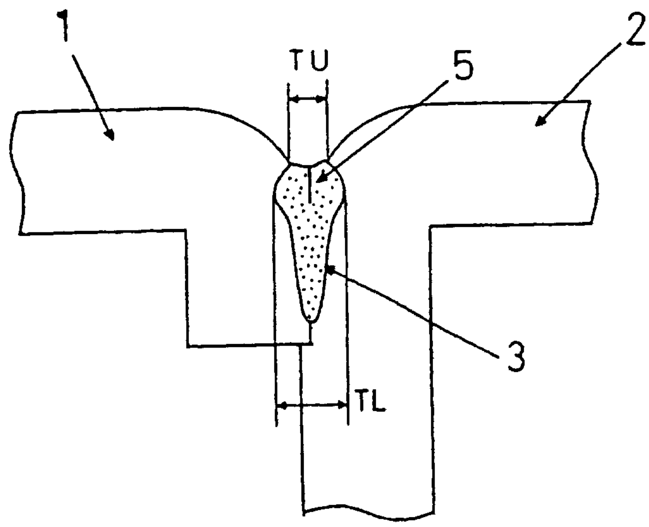

FIG. 13

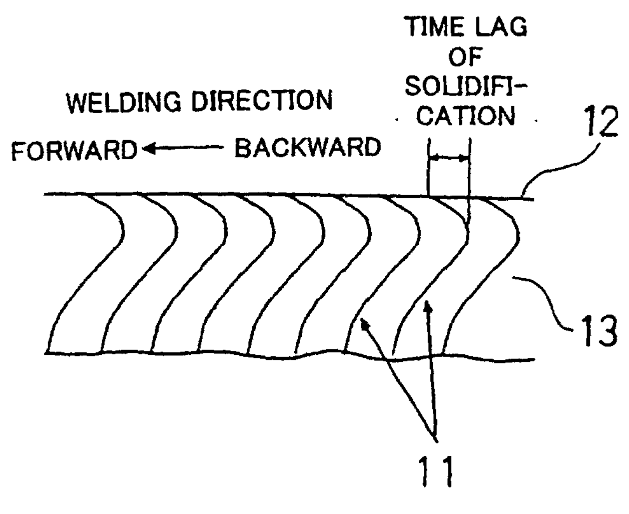
TIME LAG OF SOLIDIFI- CATION
WELDING DIRECTION
FORWARD
BACKWARD
12
13
11

FIG. 14

[TABLE 1]

| LASER OUTPUT | WELDING SPEED | FOCUS POSITION | SHIELDING GAS | INCLINED ANGLE OF BEAM |
|---|---|---|---|---|
| 500–4500 [W] | 0.5–3 [m/min] | ±0 [mm] | Ar 30 [L/min] | 7° |

FIG. 15

[TABLE 2]

| APPLICATION | GROOVE TYPE | WIDTH OF FLAT PORTION [mm] | LASER OUTPUT [W] | WELDING SPEED [m/min] | WELD-HEAT INPUT Q (LASER OUTPUT/ WELDING SPEED) [W]/[m/min] | PRESENCE OR ABSENCE OF CRACK |
|---|---|---|---|---|---|---|
| COMP. EX. 1 | FIG. 5(a) | 0 | 500 | 0. 5 | 1000 | × |
| | | 0 | 500 | 1. 0 | 500 | × |
| | | 0 | 1000 | 0. 5 | 2000 | × |
| | | 0 | 1000 | 1. 0 | 1000 | × |
| | | 0 | 2000 | 0. 5 | 4000 | × |
| | | 0 | 2000 | 1. 0 | 2000 | × |
| | | 0 | 2000 | 2. 0 | 1000 | × |
| | | 0 | 3000 | 1. 5 | 2000 | × |
| | | 0 | 3000 | 2. 0 | 1500 | × |
| EX. 1 | FIG. 5(b) | 0. 8 | 500 | 0. 5 | 1000 | ○ |
| | | 0. 5 | 500 | 1. 0 | 500 | ○ |
| | | 1. 5 | 1000 | 0. 5 | 2000 | ○ |
| | | 1. 0 | 1000 | 1. 0 | 1000 | ○ |
| | | 1. 5 | 2000 | 1. 0 | 2000 | ○ |
| | | 1. 0 | 2000 | 2. 0 | 1000 | ○ |
| | | 1. 5 | 3000 | 1. 5 | 2000 | ○ |
| | FIG. 5(c) | 1. 5 | 2000 | 1. 0 | 2000 | ○ |
| | | 1. 0 | 2000 | 2. 0 | 1000 | ○ |
| | | 0. 8 | 2500 | 2. 5 | 1000 | ○ |
| | | 1. 5 | 3000 | 1. 5 | 2000 | ○ |
| | | 1. 0 | 3000 | 2. 0 | 1500 | ○ |
| | | 1. 0 | 3000 | 2. 5 | 1200 | ○ |
| | | 1. 5 | 4000 | 2. 0 | 2000 | ○ |
| | | 1. 5 | 4500 | 3. 0 | 1500 | ○ |
| | | 1. 7 | 4500 | 2. 0 | 2250 | ○ |

FIG. 16

[TABLE 3]

| APPLICATION | GROOVE TYPE | WIDTH OF FLAT PORTION [mm] | LASER OUTPUT [W] | WELDING SPEED [m/min] | WELD-HEAT INPUT Q (LASER OUTPUT/ WELDING SPEED) [W]/[m/min] | PRESENCE OR ABSENCE OF CRACK |
|---|---|---|---|---|---|---|
| COMP. EX. 2 | FIG. 8(a) | 0 | 1000 | 0. 5 | 2000 | × |
| | | 0 | 2300 | 1. 5 | 1533 | × |
| | | 0 | 3000 | 1. 5 | 2000 | × |
| | | 0 | 3500 | 2. 0 | 1750 | × |
| | | 0 | 3500 | 1. 5 | 2333 | × |
| EX. 2 | FIG. 8(c) | 1. 5 | 2000 | 1. 0 | 2000 | ○ |
| | | 0. 8 | 2000 | 2. 0 | 1000 | ○ |
| | | 1. 2 | 3000 | 2. 0 | 1500 | ○ |
| | | 1. 5 | 4000 | 2. 5 | 1600 | ○ |
| | | 1. 5 | 3000 | 1. 5 | 2000 | ○ |
| | | 1. 8 | 4500 | 2. 0 | 2250 | ○ |
| | | 0. 8 | 2500 | 2. 5 | 1000 | ○ |
| | | 1. 5 | 4500 | 3. 0 | 1500 | ○ |

## INTERNATIONAL SEARCH REPORT

International application No.
PCT/JP03/02733

A. CLASSIFICATION OF SUBJECT MATTER
Int.Cl[7] B23K33/00, B23K26/20, B60R21/26

According to International Patent Classification (IPC) or to both national classification and IPC

B. FIELDS SEARCHED

Minimum documentation searched (classification system followed by classification symbols)
Int.Cl[7] B23K33/00, B23K26/20, B60R21/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings Microfilm of the specification and drawings odel Application No. 31922/1990(Laid-open No. 126292/1991) (Topy Industries Ltd.), 19 December, 1991 (19.12.91), Page 4, line 9 to page 9, line 3; Fig. 1 (Family: none) | 1-10 |
| A | JP 2001-239914 A (Takata Corp.), 04 September, 2001 (04.09.01), Column 3, lines 45 to 47; column 5, lines 38 to 41; Fig. 1 (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 June, 2003 (17.06.03) | 01 July, 2003 (01.07.03) |
| Name and mailing address of the ISA/ Japanese Patent Office | Authorized officer |
| Facsimile No. | Telephone No. |

Form PCT/ISA/210 (second sheet) (July 1998)